# EUROPEAN PATENT APPLICATION

(11) **EP 3 657 631 A1**
(43) Date of publication of application: **27.05.2020**
(21) Application number: 18207533.3
(22) Date of filing: 21.11.2018
(51) Int. Cl.: H02J 50/90, H02J 50/80, B60L 53/39, B60L 53/65, B60L 53/66, B60L 53/62, H01F 38/14

(54) **SYSTEM AND METHOD FOR ASSEMBLING ELECTROMAGNETICALLY COUPLED COMPONENTS OF AN ELECTRICAL DEVICE**

(71) Applicant: Siemens Aktiengesellschaft, 80333 München (DE)
(72) Inventor: BHATIA, Rahul, 422009 Nashik, Maharashtra (IN); VENKATRAMANI, Anand, 560076 Nashik, Maharashtra (IN)
(74) Representative: Patentanwaltskanzlei WILHELM & BECK

(57) **Abstract**

A device assembling system (100) for assembling an electrical device (400, 700), comprising a data reception module (101) and a position determination module is disclosed. The data reception module (101) obtains device data associated and design constraint data associated with the electrical device (400, 700). The position determination module (102) determines a physical alignment between at least two coils (402B, 403, and 701B, 702) electromagnetically coupled with one another, of the electrical device, based on the device data and the design constraint data such that an electromagnetic coupling between the components is managed. Also, provided is a method for managing an electromagnetic coupling between one or more components of the electrical device (400, 7000). Also, provided is an electrical device (400) assembled by employing the device assembling system (100) with minimized coupling and an electrical device (700) assembled by employing the device assembling system (100) with maximized coupling.

## Description

The present invention relates to a system and a method for assembling an electrical device. More particularly, the present invention relates to a system and a method for assembling electromagnetically coupled components of the electrical device for managing electromagnetic coupling there-between, decreasing electromagnetic interference there-between, and increasing measurement accuracy thereof.

Typically, sensors are deployed in many regions of a power grid to sense the voltage and the current of power lines. A primary functionality of these sensors, for example, fault status indicators, is to detect faults so that fault localization time is reduced thus reducing downtime of grids. Downstream sections of the grids carry very low currents, for example, about 3A whereas the upstream sections carry high currents up to about 600A. Moreover, during occurrence of a fault, this current may go up to 1800A. These fault sensors thus, need to measure and operate with a wide dynamic range, for example, ranging from 3A-1800A. Moreover, these devices need to operate with a high reliability, for example having a functional life greater than ten years without maintenance for the entire duration of functional life since removing and reinstalling affects the quality of grids.

A line mounted power network device being operated from energy harvested from the power line, for example, a fault status indicator features magnetic energy harvesting technique using an energy harvester coil wound on a flux concentrator having, for example, a ferromagnetic core. The energy harvester coil harvests power from the current flowing through the power line. These fault status indicators are mounted on existing power lines, without disconnecting the lines. Therefore, to slide in the devices, the flux concentrator that harvests power from the transmission and/or distribution lines, has to be of a split configuration so as to form a clamp around the power line thereby, creating an air gap in its core. Thus, insertion of the fault status indicator mandates use of two parts of a core, that is, two cores that can clamp around the power lines. The fault status indicator also consists of a measurement coil used for current measurement. An airgap between the two cores of the flux concentrator increases leakages. As the measurement coil and the energy harvester coil are positioned in proximity with one another, a leakage flux caused in the flux concentrator links with the measurement coil and affects accuracy of the current being measured. Hence, the airgap should be maintained as small as possible. However, smaller the airgap higher is the saturation of the core. Typically, a desired accuracy to be achieved for the measurements is of about 1% error tolerance over a wide dynamic range of operation of the fault status indicator. However, the electromagnetic interference causes increase in errors beyond 1%.

Electrical devices apart from the aforementioned fault sensing indicators, for example, wireless chargers such as ones used for charging electric vehicles, typically include a pair of electro-magnetically coupled coils, one mounted on the vehicle and one mounted on the ground that transfers charge to the coil mounted on the vehicle for charging the vehicle. Such electrical devices require an assembly that maintains the coupling between the coils so as to transfer the charge effectively while keeping size and weight of the coils optimal.

Therefore, it is an object of the present invention to provide a device assembling system and method for an electrical device of the aforementioned kind that decreases electromagnetic interference between electromagnetically coupled components of the electrical device and increases measurement accuracy of the electrical device while maintaining size and weight of the electrical device.

The electromagnetic interference, for example, in a fault sensing indicator varies based on line current flowing in the current carrying conductor and the load on the coil, that is, an energy harvester coil. Disclosed herein is a design space claimed in form of the device assembling system and a method for an electrical device, for achieving a predefined measurement accuracy of the electrical device. Various parameters that are controlled in this design space by the device assembling system and method comprise, for example, a physical distance between the electromagnetically coupled coils, a physical distance and orientation of a coil with respect to a current carrying conductor on which the coil is mounted, a physical distance between the coils, and/or an airgap between sections of a core on which a coil is at least partially wound.

A device assembling system for assembling an electrical device is disclosed herein. As used herein, "electrical device" refers to any device that is being powered via electromagnetic flux induction. For example, a power network device such as a fault sensing indicator harvesting power from a current carrying conductor via electromagnetic flux induction, or a wireless charging device, such as an electric vehicle charger transferring power to the electric vehicle via electromagnetic flux induction. Also used herein, the term "assembling" refers to determining physical alignment of one or more components of the electrical device that harvest and/or transfer power via electromagnetic flux induction.

The device assembling system, in one aspect of the present invention, is installed on and accessible by a user device, for example, a personal computing device, a workstation, a client device, a network enabled computing device, any other suitable computing equipment, and combinations of multiple pieces of computing equipment. In another aspect, of the present invention, the device assembling system is downloadable and usable on the user device, and is configured as a web based platform, for example, a website hosted on a server or a network of servers, and/or is implemented in the cloud computing environment. In yet another aspect of the present invention, the device assembling system comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules of the device assembling system comprising, for example, a data reception module and a position determination module. The processor is configured to execute the defined computer program instructions.

The data reception module obtains device data, for example, from a user of the device assembling system, associated with the electrical device and design constraint data associated with the electrical device. As used herein, "device data" comprises data associated with physical aspects of the electrical device. For example, physical dimensions of coils of the electrical device and/or physical dimensions of a core on which one of the coils is at least partially mounted. The physical dimensions comprise, for example, a number of turns of each coil, a material of the coil, a cross-section of the coil, a material of the core, a thickness of the core, etc. Also, used herein, "design constraint data" refers to data associated with the constraints within which the electrical device is expected to perform. For example, the design constraint data comprises overall physical dimensions of the electrical device or a desired measurement accuracy of the electrical device, that is, overall physical size of the electrical device and overall weight of the electrical device, or a desired accuracy, that is, a tolerance for errors in the measurements such as 1%. According to one aspect of the present invention, the device data and the design constraint data is stored in a device database.

The position determination module determines a physical alignment between one or more components of the electrical device based on the device data and the design constraint data such that an electromagnetic coupling between the components is managed, that is, increased or decreased. The components comprise at least two coils electromagnetically coupled with one another. According to an embodiment of the present invention, the components also comprise a core on which one of the coils is at least partially wound. The core is for example, a magnetic core or an air core. The electromagnetic coupling is increased or decreased based on the intended application of the electrical device. For example, when the electrical device is a power line device, the coupling between the two electromagnetically coupled coils, that is, a measurement coil and a harvesting coil is decreased to decrease the electromagnetic interference there-between and increase measurement accuracy of the electrical device whilst maintaining the overall size and weight of the electrical device. In another example, when the electrical device is a wireless charging device for an electric vehicle, the coupling between the two electromagnetically coupled coils, that is, a coil transferring power and a coil receiving the transferred power is increased for transferring maximum power whilst maintaining the overall size and weight of the electrical device within constraints of ground clearance available for the electric vehicle.

According to one aspect of the present invention, the physical alignment of the one or more components comprises at least a distance between the electromagnetically coupled coils. The position determination module determines this distance between the coils based on the design constrain data of overall physical size of the electrical device. For example, a highest distance between the coils is selected for decreasing electromagnetic interference, as allowed by the mechanical space constraints associated with the overall size of the electrical device. According to another aspect of the present invention, the physical alignment of the one or more components comprises a distance, that is, an air gap between a first core section and a second core section of the core on which one of the coils is at least partially wound. For example, the air gap is selected so as to be as less as possible to avoid flux leakage from the wound harvesting coil to be linked with the measurement coil whilst keeping it big enough to avoid core saturation and maintain the measurement accuracy of the electrical device. According to yet another aspect of the present invention, the physical alignment of the one or more components comprises a distance between one of the coils and a current carrying conductor associated with which the coil is measuring one or more parameters, that is, a line current. For example, a smallest distance between the coil and the current carrying conductor is selected so as to increase coupling there-between and decrease the electromagnetic interference thereby increasing the measurement accuracy whilst maintaining the mechanical space constraints associated with the overall size of the electrical device. According to yet another aspect of the present invention, the physical alignment of the one or more components comprises an angular alignment of the electromagnetically coupled coils with respect to one another as well as with respect to one or more of other components of the electrical device.

Also disclosed herein is, a method for managing an electromagnetic coupling between one or more components of an electrical device. As used herein, "managing" refers to increasing or decreasing electromagnetic coupling between one or more components of the electrical device. The method employs the device assembling system as disclosed above. The method comprises obtaining device data associated with the electrical device by a data reception module of the device assembling system. The method further comprises obtaining design constraint data associated with the electrical device by the data reception module. The method further comprises determining a physical alignment between the components based on the device data and the design constraint data by a position determination module of the device assembling system, wherein the components comprise at least two coils electromagnetically coupled with one another. The method comprises determining the physical alignment between the one or more components by varying a distance between the coils, a distance between one of the coils and a current carrying conductor of which the coil is measuring one or more parameters, and/or a distance between sections of a core on which one of the coils is at least partially wound. The method comprises varying one or more of the above distances based on the obtained device data until the obtained design constraint data is met.

Also disclosed herein, is an electrical device comprising at least two coils, for example, a first coil and a second coil, electromagnetically coupled with one another wherein the coils are physically aligned such that an electromagnetic coupling there-between is maximized by using the device assembling system. The electrical device is a device wirelessly transferring power between the coils, for example, a wireless charger for an electric vehicle. An electric vehicle is used herein as a non-limiting example to describe any remote system configured to be charged electrically, an example of which is a vehicle that includes, as part of its locomotion capabilities, electrical power derived from a chargeable energy storage device such as one or more rechargeable electrochemical cells, etc. By way of example and not limitation, a remote system is described herein in the form of an electric vehicle. Furthermore, other remote systems that may be at least partially powered using a chargeable energy storage device are also contemplated. According to an embodiment of the present invention, one of the first coil and the second coil is at least partially wound on a core, such as, an induction coil, at least partially wound around a flux concentrator so as to generate flux therewithin when the coil is energized. The core is a magnetic core or an air core. According to an embodiment of the present invention, a local distribution module and or other grid connection module may be connected to the coil to provide an alternating current (AC) or a direct current (DC) supply to in order to energize the coil. According to an embodiment of the present invention, the coil and the core are adjustably mounted on an elevation device, thereby, allowing an increase and/or decrease in proximity to the other coil, for example the second coil which is electromagnetically coupled with the first coil wound on the core, based on the flux being coupled there-between such that a maximum flux is coupled, that is, maximum energy transfer happens there-between. The second coil is, for example, an induction coil, coupling with the flux, and is mountable on the electric vehicle. Advantageously, the electromagnetically coupled coils are physically aligned at a particular distance there-between so as to maximize coupling, by employing the device assembling system. The distance is selected to be as less as allowed by the design constraint data of overall physical dimensions of the electrical device as well as the ground clearance of the electrical vehicle.

Also disclosed herein, is an electrical device physically mountable on a current carrying conductor. According to an embodiment of the present invention, the current carrying conductor refers to a power line such as an overhead line or an underground cable of a power transmission network and/or a power distribution network. The electrical device is a device powerable by electromagnetic flux induced from the current carrying conductor, for example, a self-powered device used in the power grid, such as a fault sensing indicator and comprises at least two coils electromagnetically coupled with one another. The coils comprise a sensing coil and a harvesting coil. The harvesting coil is at least partially wound on a core comprising a first core section and a second core section. The core acts as a flux concentrator and converts electrical energy being harvested from a line current flowing in the current carrying conductor into magnetic energy in form of an electromagnetically induced flux. The harvesting coil wound on the flux concentrator, then converts this magnetic energy into an electrical equivalent in form of an induced voltage. According to an embodiment of the present invention, the coil is configured as an induction coil comprising a wire wound around the core. According to an embodiment of the present invention, the core is a magnetic core. According to another embodiment of the present invention, the core is a non-magnetic core thereby, producing an air-core flux concentrator. The wound coil couples an induced voltage proportional to a line current flowing in the current carrying conductor, for powering a load, that is, the electrical device. Sinusoidally time-varying current flows in the current carrying conductor producing time-varying magnetic fields around the conductor. Windings of the coil positioned proximal to the current carrying conductor couple with the time-varying magnetic fields thereby producing an induced voltage therewithin. The measurement coil is, for example, an induction coil, electro-magnetically coupled with the harvesting coil and physically disposed in proximity to the current carrying conductor for measuring the line current flowing there-through. Advantageously, the measurement coil and the harvesting coil are physically aligned with one another, and with the current carrying conductor, by employing the device assembling system, such that an electromagnetic coupling there-between is minimized. The minimized electromagnetic coupling ensures decrease in electromagnetic interference there-between thereby, improving accuracy of measurement of the measurement coil. Furthermore, the first core section and the second core section of the core on which the harvesting coil is at least partially wound, are physically aligned at a particular distance, that is, an air-gap to avoid core saturation and also improve measurement accuracy. Advantageously, the air-gap is about 0.5 mm. Advantageously, the measurement coil is physically aligned at a particular distance with the current carrying conductor, by employing the device assembling system, such that the coupling between the measurement coil and the current carrying conductor increases whilst maintaining the overall physical dimensions defined in the design constraint data for the electrical device. Similarly, the measurement coil and the harvesting coil are physically aligned at a particular distance there-between, by employing the device assembling system, such that the coupling there-between is minimized and the electro-magnetic interference is decreased, thereby improving the measurement accuracy, whilst maintaining the overall physical dimensions defined in the design constraint data for the electrical device.

Also disclosed herein is, a computer program product comprising a non-transitory computer readable storage medium storing computer program codes that comprise instructions executable by at least one processor for performing the method steps disclosed above for managing an electromagnetic coupling between one or more components of an electrical device by employing the device assembling system.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of a device assembling system for assembling an electrical device.
- FIG 2: is a block diagram illustrating architecture of a computer system employed by the device assembling system illustrated in FIG 1.
- FIG 3: is a process flowchart illustrating a method for managing an electromagnetic coupling between one or more components of an electrical device employing the device assembling system illustrated in FIG 1.
- FIG 4: illustrates a block diagram of a power network device, according to an embodiment of the electrical device disclosed in the present invention.
- FIG 5A: illustrates electromagnetically coupled coils of the power network device shown in FIG 4.
- FIG 5B: illustrates a harvesting coil of the electromagnetically coupled coils shown in FIG 5A, at least partially wound on a core of the power network device shown in FIG 4.
- FIGS 6A-6B: illustrate relationship plots generated by the device assembling system shown in FIG 1 for determining physical alignment between one or more components of the power network device shown in FIG 4.
- FIG 7: illustrates a block diagram of a wireless charging system for an electric vehicle, according to an embodiment of the electrical device disclosed in the present invention.
- FIGS 8A-8B: illustrate embodiments of electromagnetically coupled coils of the wireless charging system shown in FIG 4.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

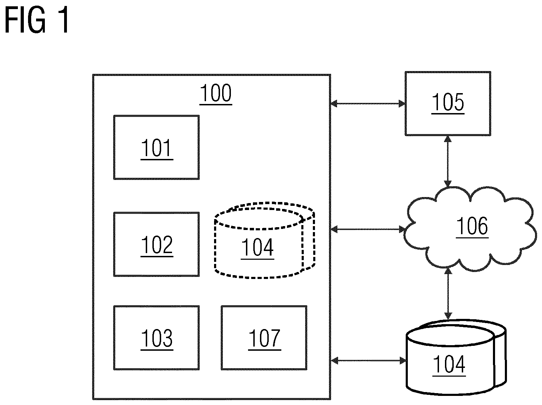

FIG 1 illustrates a block diagram of a device assembling system 100 for assembling an electrical device. The device assembling system comprises a data reception module 101 and a position determination module 102. The data reception module 101 obtains device data associated with the electrical device and design constraint data associated with the electrical device via a user device 105. The user device is in communication with the device assembling system 100 directly and/or via a communication network 106. The communication network 106 is, for example, a wired network, a wireless network, a cloud computing network, etc. The communication network 106 may also represent a network shared for Internet of Things (IoT). The position determination module 102 determines a physical alignment between one or more components of the electrical device based on the device data and the design constraint data such that an electromagnetic coupling between the components is managed. The device assembling system 100 further comprises a report generation module 103 and a device database 104. The report generation module 103 generates graphical relationship plots of the physical alignments with respect to the design constraint data. The device database 104 stores the device data and the design constraint data respective to each electrical device that the data reception module 101 receives. The device database 104 either resides within the device assembling system 100 or is in communication with the device assembling system 100 via a wired and/or a wireless communication network 106. The device assembling system 100 further comprises a graphical user interface 107 for rendering the reports generated by the report generation module 103 and for enabling a user of the device assembling system 100 to provide his/her inputs, for example, the device data and the design constraint data.

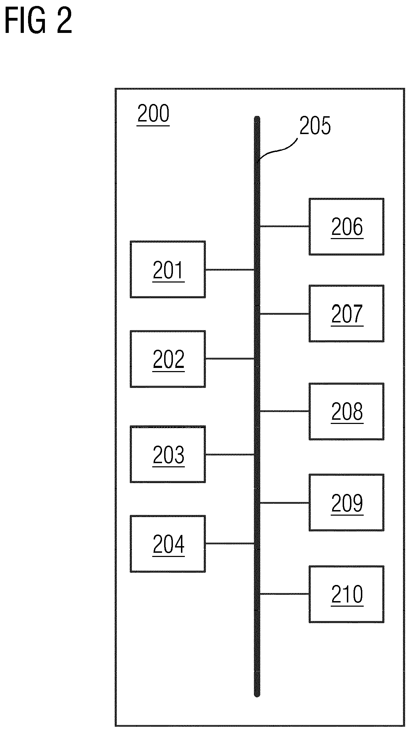

FIG 2 is a block diagram illustrating architecture of a computer system 200 employed by the device assembling system 100 illustrated in FIG 1. The device assembling system 100 employs the architecture of the computer system 200 illustrated in FIG 2. The computer system 200 is programmable using a high level computer programming language. The computer system 200 may be implemented using programmed and purposeful hardware. As illustrated in FIG 2, the computer system 200 comprises a processor 201, a non-transitory computer readable storage medium such as a memory unit 202 for storing programs and data, an input/output (I/O) controller 203, a network interface 204, a data bus 205, a display unit 206, input devices 207, a fixed media drive 208 such as a hard drive, a removable media drive 209 for receiving removable media, output devices 210, etc. The processor 201 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 201 may also be implemented as a processor set comprising, for example, a general purpose microprocessor and a math or graphics coprocessor. The processor 201 is selected, for example, from the Intel® processors, Advanced Micro Devices (AMD®) processors, International Business Machines (IBM®) processors, etc. The device assembling system 100 disclosed herein is not limited to a computer system 200 employing a processor 201. The computer system 200 may also employ a controller or a microcontroller. The processor 201 executes the modules, for example, 101, 102, 103, etc., of the device assembling system 100.

The memory unit 202 is used for storing programs, applications, and data. For example, the data reception module 101, the position determination module 102, the report generation module 103, etc., of the device assembling system 100 are stored in the memory unit 202 of the computer system 200. The memory unit 202 is, for example, a random access memory (RAM) or another type of dynamic storage device that stores information and instructions for execution by the processor 201. The memory unit 202 also stores temporary variables and other intermediate information used during execution of the instructions by the processor 201. The computer system 200 further comprises a read only memory (ROM) or another type of static storage device that stores static information and instructions for the processor 201. The I/O controller 203 controls input actions and output actions performed by the device assembling system 100.

The network interface 204 enables connection of the computer system 200 to the communication network 106. For example, the device assembling system 100 connects to the communication network 106 via the network interface 204. In an embodiment, the network interface 204 is provided as an interface card also referred to as a line card. The network interface 204 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 205 permits communications between the modules, for example, 101, 102, 103, etc., of device assembling system 100.

The display unit 206, via a graphical user interface (GUI) 107, displays information such as relationship plots, etc., for allowing a user to visualize the output provided by the device assembling system 100. The display unit 206 comprises, for example, a liquid crystal display, a plasma display, an organic light emitting diode (OLED) based display, etc. The input devices 207 are used for inputting data into the computer system 200. The input devices 207 are, for example, a keyboard such as an alphanumeric keyboard, a touch sensitive display device, and/or any device capable of sensing a tactile input.

Computer applications and programs are used for operating the computer system 200. The programs are loaded into the fixed media drive 208 and into the memory unit 202 of the computer system 200 via the removable media drive 209. In an embodiment, the computer applications and programs may be loaded directly via the communication network 106. Computer applications and programs are executed by double clicking a related icon displayed on the display unit 206 using one of the input devices 207. The output devices 210 output the results of operations performed by the device assembling system 100.

The processor 201 executes an operating system, for example, the Linux® operating system, the Unix® operating system, any version of the Microsoft® Windows® operating system, the Mac OS of Apple Inc., the IBM® OS/2, etc. The computer system 200 employs the operating system for performing multiple tasks. The operating system is responsible for management and coordination of activities and sharing of resources of the computer system 200. The operating system further manages security of the computer system 200, peripheral devices connected to the computer system 200, and network connections. The operating system employed on the computer system 200 recognizes, for example, inputs provided by the users using one of the input devices 207, the output display, files, and directories stored locally on the fixed media drive 208. The operating system on the computer system 200 executes different programs using the processor 201. The processor 201 and the operating system together define a computer platform for which application programs in high level programming languages are written.

The processor 201 of the computer system 200 employed by the device assembling system 100 retrieves instructions defined by the modules, for example, 101, 102, 103, etc., of the device assembling system 100 for performing respective functions disclosed above. The processor 201 retrieves instructions for executing the modules, for example, 101, 102, 103, etc., of the device assembling system 100 from the memory unit 202. A program counter determines the location of the instructions in the memory unit 202. The program counter stores a number that identifies the current position in the program of each of the modules, for example, 101, 102, 103, etc., of the device assembling system 100. The instructions fetched by the processor 201 from the memory unit 202 after being processed are decoded. The instructions are stored in an instruction register in the processor 201. After processing and decoding, the processor 201 executes the instructions, thereby performing one or more processes defined by those instructions.

At the time of execution, the instructions stored in the instruction register are examined to determine the operations to be performed. The processor 201 then performs the specified operations. The operations comprise arithmetic operations and logic operations. The operating system performs multiple routines for performing a number of tasks required to assign the input devices 207, the output devices 210, and memory for execution of the modules, for example, 101, 102, 103, etc., of the device assembling system 100. The tasks performed by the operating system comprise, for example, assigning memory to the modules, for example, 101, 102, 103, etc., of the device assembling system 100, and to data used by the device assembling system 100, moving data between the memory unit 202 and disk units, and handling input/output operations. The operating system performs the tasks on request by the operations and after performing the tasks, the operating system transfers the execution control back to the processor 201. The processor 201 continues the execution to obtain one or more outputs. The outputs of the execution of the modules, for example, 101, 102, 103, etc., of the device assembling system 100 are displayed to the user on the GUI 107.

For purposes of illustration, the detailed description refers to the device assembling system 100 being run locally on the computer system 200; however the scope of the present invention is not limited to the device assembling system 100 being run locally on the computer system 200 via the operating system and the processor 201, but may be extended to run remotely over the communication network 106 by employing a web browser and a remote server, or other electronic devices. One or more portions of the computer system 200 may be distributed across one or more computer systems (not shown) coupled to the communication network 106.

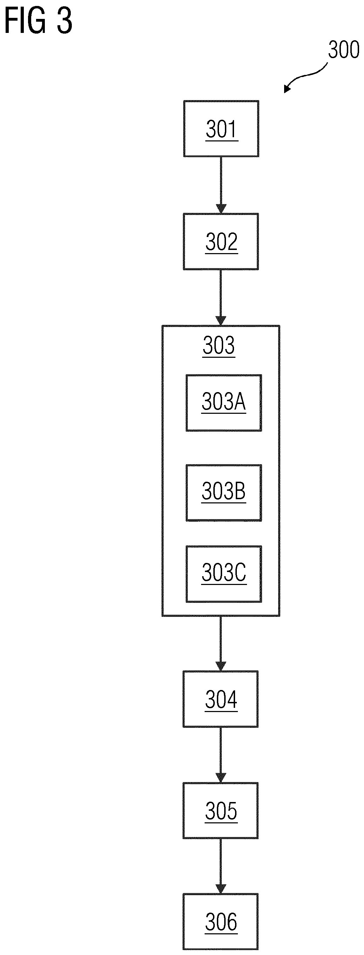

Disclosed herein is also a computer program product comprising a non-transitory computer readable storage medium that stores computer program codes comprising instructions executable by at least one processor 201 for performing method steps using the device assembling system 100, as disclosed in the detailed description of FIG 3. In an embodiment, a single piece of computer program code comprising computer executable instructions performs one or more steps of the method according to the present invention. The computer program codes comprising computer executable instructions are embodied on the non-transitory computer readable storage medium. The processor 201 of the computer system 200 retrieves these computer executable instructions and executes them. When the computer executable instructions are executed by the processor 201, the computer executable instructions cause the processor 201 to perform the steps of the method for managing an electromagnetic coupling between one or more components of an electrical device, employing the device assembling system 100.

FIG 3 is a process flowchart illustrating a method 300 for managing an electromagnetic coupling between one or more components of an electrical device employing the device assembling system 100 illustrated in FIG 1. At step, 301, the method employs the data reception module 101 of the device assembling system 100 to obtain device data associated with the electrical device from a user of the device assembling system 100 via a user device 105. The device data comprises, for example, an intended application of the electrical device such as a device harvesting power via use of electromagnetic flux induction, a device transferring power via use of electromagnetic flux induction, etc., components of the electrical device, such as, a core, a type of core, that is, a magnetic core, an air-core, a number of coils electromagnetically coupled, a function of each of the coils such as to measure parameters, to harvest power, to transfer power, to receive power, etc., data associated with each of the components, such as, a material of the core, a material of each of the coils, number of turns of each of the coil, physical dimensions of the core and the coils, etc. At step, 302, the method employs the data reception module 101 of the device assembling system 100 to obtain design constraint data associated with the electrical device from a user of the device assembling system 100 via a user device 105. The design constraint data comprises a desired measurement accuracy of the electrical device and overall physical dimensions of the electrical device. The desired measurement accuracy is received, for example, in form of a tolerance of error associated with measurements such as +/- 1% error. The overall physical dimensions of the electrical device are received, for example, in form of mechanical space constraints in which the electrical device is to be deployed involving three dimensional measurements and weight of the electrical device. At step 303, the method employs the position determination module 102 of the device assembling system 100 to determine a physical alignment between one or more of the components based on the device data and the design constraint data. To determine the physical alignment of the components of an electrical device physically mountable on a power conductor and having two electromagnetically coupled coils, one wound around a magnetic core for harvesting power electromagnetically from the conductor and other coupling with the conductor for measurement of parameters associated with the conductor, at step 303A, the method employs the position determination module 102 to vary a distance between the electromagnetically coupled coils so as to avoid electromagnetic interference there-between. The distance is varied in a range of +/- 10% about a maximum possible separation between the electromagnetically coupled coils, whilst maintaining the overall physical dimensions constraint and the measurement accuracy constraint. That is, the distance variation is determined such that at every point along the variation plot, an impact on the desired measurement accuracy and on the desired overall physical dimensions of the electrical device is determined. Further to determine the physical alignment, at step 303B, the method employs the position determination module 102 to vary a distance between a conductor and a coil intended for measuring parameters associated with the conductor. The distance is varied between nearest possible arrangement and a farthest possible arrangement whilst maintaining the desired measurement accuracy of the electrical device. Further to determine the physical alignment, at step 303C, the method employs the position determination module 102 to vary an air-gap between sections of the magnetic core whilst avoiding core saturation that may impact power being harvested thus, impacting the measurement accuracy of the electrical device. At step 304, the method employs the report generation module 103 of the device assembling system 100 to generate relationship plots of the physical alignment variations that have been determined with respect to the design constraint data at steps 303A, 303B and 303C. At step 305, the method employs the data reception module 101 to receive a selection from the user via the user device 106 for physical alignment between the components. At step 306, the method stores the device data, the design constraint data, the physical alignment variations, and the user selections of the physical alignment in the device database 104 of the device assembling system 100 for future references if required by the user. Also, in an embodiment, the method at steps 303A, 303B, and 303C, may refer to the device database 104 prior to determining the physical alignment variations to avoid redetermination of the physical alignment.

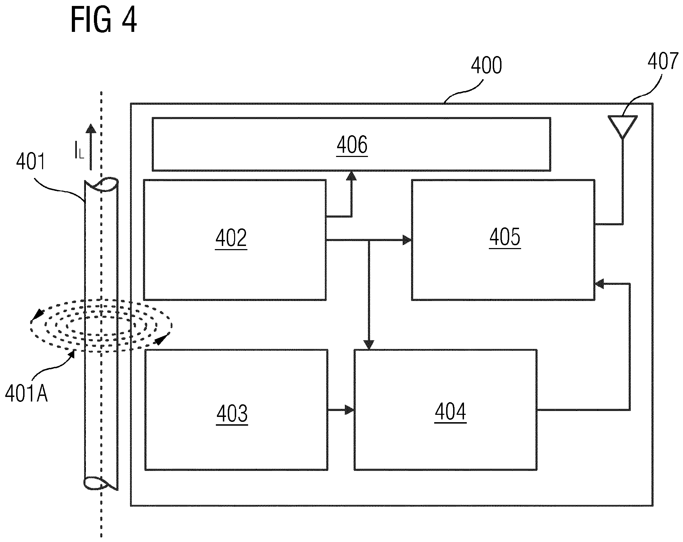

FIG 4 illustrates a block diagram of a power network device 400, according to an embodiment of the electrical device disclosed in the present invention. The power network device 400 is physically disposable on a current carrying conductor 401. The power network device 400 is a fault sensing indicator mounted on overhead power lines. The current carrying conductor 401 carries a line current I_{L} therewithin creating a magnetic field 401A around itself in the direction shown in FIG 4. The power network device 400 comprises at least a power harvesting module 402. The power network device 400 may also comprise a sensor module 403, a parameter conditioning module 404, a processor 405, an indicator module 406, and a communication module 407 in operable communication with one another. The power network device 400 may further comprise an energy storage module (not shown), for example, a battery to store the power being harvested by the power harvesting module 402. The power harvested is used for powering one or more of the processor 405, the parameter conditioning module 404, the indicator module 406, and the communication module 407, of the power network device 400.

The sensor module 403 is a coil such as an induction coil measuring one or more parameters associated with the current carrying conductor 401. The parameters comprise, for example, a line current and/or a line voltage. The processor 405 detects a fault in the power network based on the parameters measured. The fault is for example, a line to line fault, a line to earth fault, a short circuit fault, etc., on the power network. The indicator module 406 indicates this fault, for example, by flashing a visual indication signal with help of light emitting diodes, etc. The communication module 407 transmits data associated with faults to a communication hub at a proximal substation. The power harvesting module 402 comprises a coil wound at least partially on a core, and coupled with the current carrying conductor 401 to harvest power.

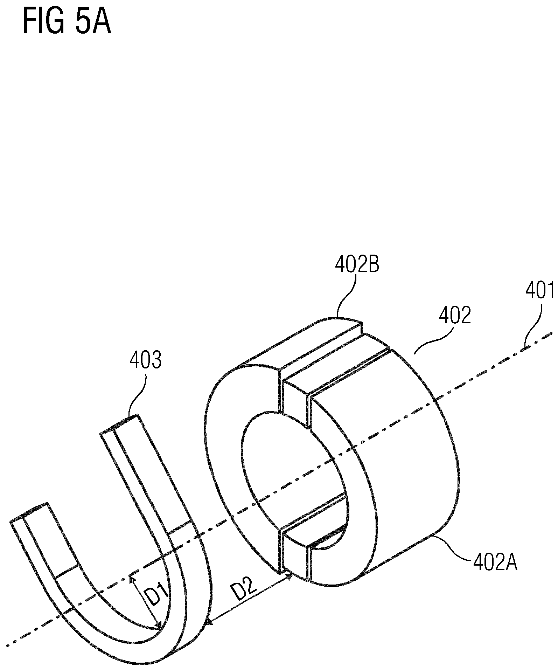

FIG 5A illustrates electromagnetically coupled coils 402B and 403 of the power network device 400 shown in FIG 4. The measurement coil 403 is also coupled to the current carrying conductor 401 and acts as a sensor for sensing parameters associated with the conductor 401. The harvesting coil 402B is wound at least partially on a core 402A of the power harvesting module 402 of the power network device 400. The device assembling system 100 shown in FIG 1 determines a distance D1 between the measurement coil 403 and the conductor 401 and a distance D2 between the electromagnetically coupled coils 402B and 403 for reducing electromagnetic interference and maintaining desired measurement accuracy whilst maintaining the overall physical dimensions of the power network device 400.

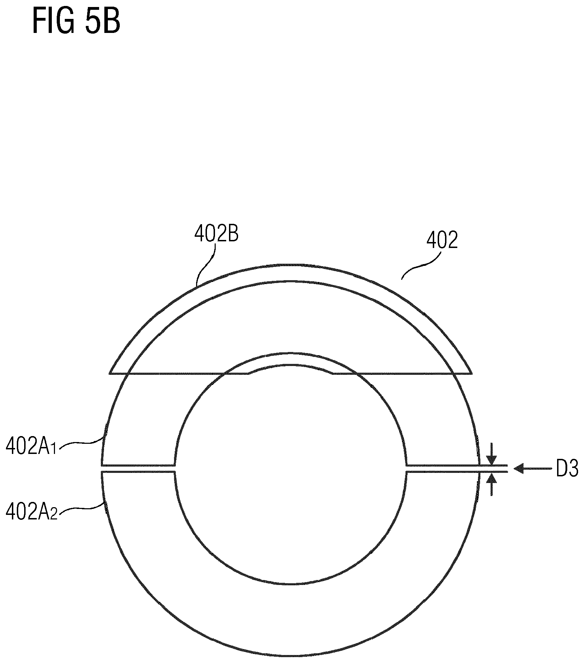

FIG 5B illustrates a harvesting coil 402B of the electromagnetically coupled coils 403 and 402B shown in FIG 5A, at least partially wound on a core 402A of the power network device 400 shown in FIG 4. The device assembling system 100 shown in FIG 1 determines an air-gap, that is, a distance D3 between core sections 402A₁ and 402A₂ of the core 402A for avoiding core saturation and maintaining the desired measurement accuracy of the power network device 400.

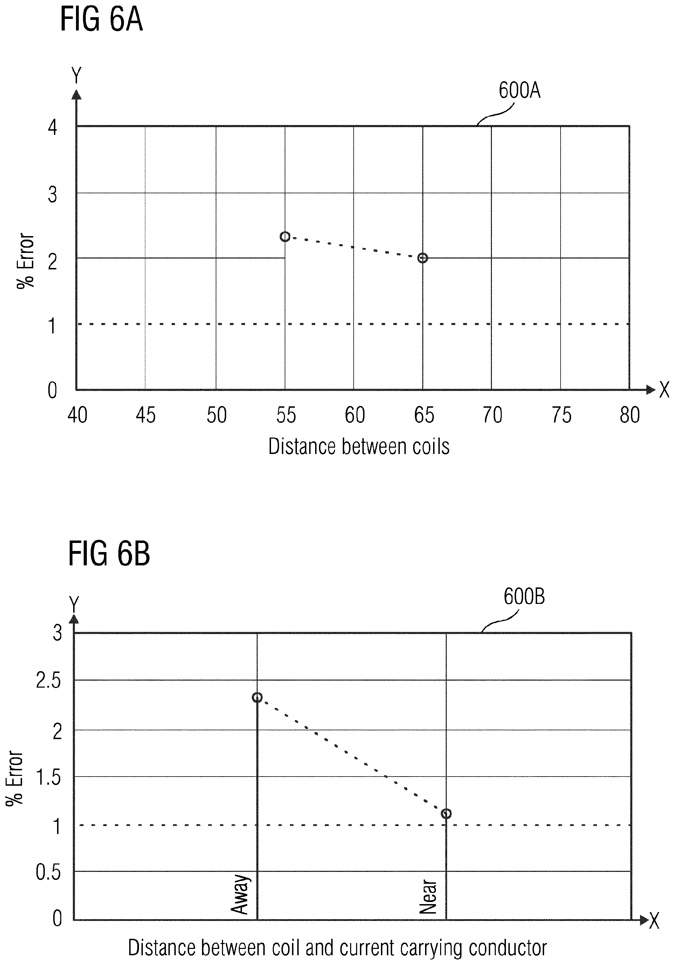

FIGS 6A-6B illustrate relationship plots 600A and 600B generated by the device assembling system 100 shown in FIG 1 for determining physical alignment between one or more components of the power network device 400 shown in FIG 4. As shown in FIG 6A, the relationship plot 600A comprises a variation of distance between coils 402B and 403 in a range of about 55mm to about 65mm along X axis, and on Y axis, an impact of this variation on the measurement accuracy. Similarly, as shown in FIG 6B, the relationship plot 600B comprises a variation of distance between the current carrying conductor 401 and the measurement coil 403 from a nearest possible arrangement to a farthest possible arrangement determined based on the overall physical dimensions constraints, along X axis, and along Y axis is shown its impact on the measurement accuracy. The relationship plots 600A and 600B are generated by the relationship plot generation module 103 of the device assembling system 100.

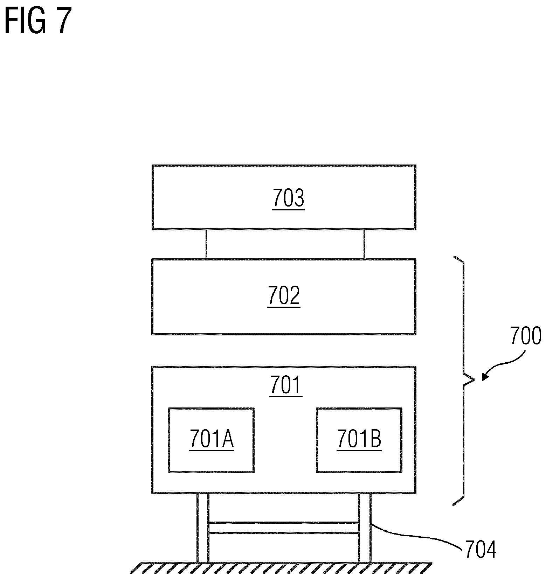

FIG 7 illustrates a block diagram of a wireless charging system 700 for an electric vehicle 703, according to an embodiment of the electrical device disclosed in the present invention. The wireless charging system 700 comprises components such as a charge transfer module 701 and a charge reception module 702 mounted on the electric vehicle 703. The charge transfer module 701 comprises a core 701A and a coil 701B at least partially wound on the core 701A. The charge reception module 702 is a coil 702 mounted on the electric vehicle 703, and electromagnetically coupled with the coil 701B of the charge transfer module 701. The charge transfer module 701 is mounted on an elevation device 704 for adjusting height of the charge transfer module 701 with respect to the positioning of the charge reception module 702 according to ground clearance of the electric vehicle 703.

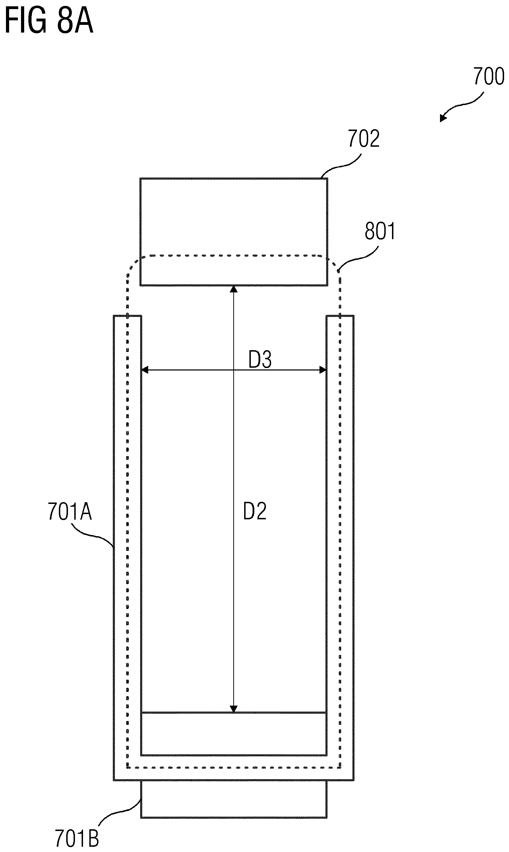

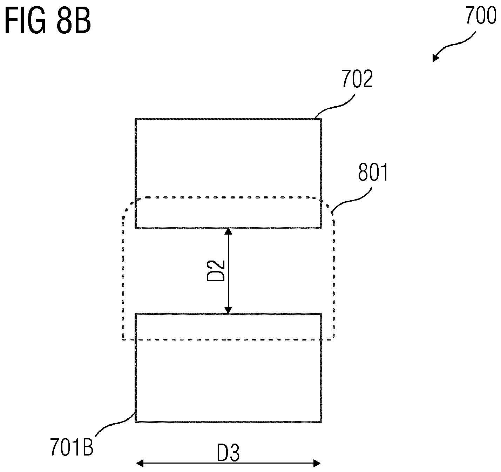

FIGS 8A-8B illustrate embodiments of electromagnetically coupled coils 701B and 702 of the wireless charging system 700 shown in FIG 4. In the embodiment shown in FIG 8A, the wireless charging system 700 comprises a charge transfer module 701 having a coil 701B at least partially wound on a core 701A and a charge reception module 702, that is, a coil 702 electromagnetically coupled with the coil 701B. Upon energizing of the coil 701B flux is generated in the core 701A which is electromagnetically coupled with the coil 702 and the charge transfer takes place. To increase mutual coupling between the coils 701B and 702, the device assembling system 100 shown in FIG 1 determines a distance D2 at which the coils are positioned with respect to one another and an air-gap D3 between arms of the core 701A ensuring reduction in losses and increase in the mutual coupling between the coils 701B and 702 so that higher power can be delivered to the load, thereby, achieving faster charging of the electric vehicle 703 whilst maintaining the design constraint data associated with the wireless charging system 700. In the embodiment shown in FIG 8B, the wireless charging system 700 comprises a pair of electromagnetically coupled coils 701B and 702 with the coil 701B wound on an air core. To increase mutual coupling between the coils 701B and 702, the device assembling system 100 shown in FIG 1 determines a distance D2 at which the coils are positioned with respect to one another and a distance D3 associated with the air core represented as the width of the coil 701B whilst maintaining the design constraint data associated with the wireless charging system 700.

Thus, disclosed in the present invention is the device assembling system 100 and method providing a design space involving controlling of physical alignment of electromagnetically coupled coils in an electrical device with respect to one another and with respect to one or more of other components of the electrical device to meet the design constraint data defined for the electrical device.

It will be readily apparent that the various methods, algorithms, and computer programs disclosed herein may be implemented on computer readable media appropriately programmed for computing devices. As used herein, "computer readable media" refers to non-transitory computer readable media that participate in providing data, for example, instructions that may be read by a computer, a processor or a similar device. Non-transitory computer readable media comprise all computer readable media, for example, non-volatile media, volatile media, and transmission media, except for a transitory, propagating signal.

The computer programs that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the computer program codes comprising computer executable instructions may be implemented in any programming language. The computer program codes or software programs may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) 107 or perform other functions, when viewed in a visual area or a window of a browser program. Various aspects of the method and system disclosed herein may be implemented as programmed elements, or non-programmed elements, or any suitable combination thereof. The computer program product disclosed herein comprises one or more computer program codes for implementing the processes of various embodiments.

Where databases are described such as the device database 104, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects.

### Reference list

100 device assembling system
101 data reception module
102 position determination module
103 report generation module
104 device database
105 user device
106 communication network
107 Graphical User Interface (GUI)
200 computer system
201 processor
202 memory unit
203 I/O controller
204 network interface
205 data bus
206 display unit
207 input devices
208 fixed media drive
209 removable media drive
210 output devices
400 electrical device/power network device
401 current carrying conductor
402 power harvesting module
402A core/magnetic core/harvesting core
402A1, 402A2 core sections
402B coil/harvesting coil
403 sensor module/coil/measurement coil
404 parameter conditioning module
405 processor
406 indicator module
407 communication module
600A, 600B relationship plot
700 wireless charging system/electrical device
701 charge transfer module
701A core/magnetic core/air core
701B coil
702 charge reception module/coil
703 electric vehicle
704 elevation device
D1 distance between measurement coil and current carrying conductor
D2 distance between coils
D3 air-gap/distance between sections of core

## Claims

1. A device assembling system (100) for assembling an electrical device (400, 700), comprising:
- a data reception module (101) configured to obtain device data associated with the electrical device (400, 700) and design constraint data associated with the electrical device (400, 700); and
- a position determination module (102) configured to determine a physical alignment between one or more components of the electrical device (400, 700) based on the device data and the design constraint data such that an electromagnetic coupling between the components is managed, wherein the components comprise at least two coils (402B, 403, and 701B, 702) electromagnetically coupled with one another.

2. The device assembling system (100) according to claim 1, wherein the components further comprise a core (402A, 701A) on which one of the coils (402B, 701B) is at least partially wound.

3. The device assembling system (100) according to any one of the previous claims, wherein the device data comprises one or more of physical dimensions of the coils (402B, 403, 701B, 702) and physical dimensions of a core (402A, 701A) on which one of the coils (402B, 701B) is at least partially wound.

4. The device assembling system (100) according to claim 1, wherein the design constraint data comprises one or more of overall physical dimensions of the electrical device (400, 700) and a desired measurement accuracy of the electrical device (400, 700).

5. The device assembling system (100) according to the claim 1, wherein the physical alignment of the one or more components comprises at least a distance (D2) between the coils (402B, 403, and 701B, 702).

6. The device assembling system (100) according to any one of the claims 1 and 5, wherein the physical alignment of the one or more components comprises a distance (D3) between a first core section (402A₁) and a second core section (402A₂) of a core (402A) on which one of the coils (402B, 701B) is at least partially wound.

7. A method (300) for managing an electromagnetic coupling between one or more components of an electrical device (400, 700), the method employing a device assembling system (100), the method comprising:
- obtaining device data associated with the electrical device (400, 700) by a data reception module (101) of the device assembling system (100);
- obtaining design constraint data associated with the electrical device (400, 700) by the data reception module (101) ;
- determining a physical alignment between the one or more components based on the device data and the design constraint data by a position determination module (102) of the device assembling system (100), wherein the components comprise at least two coils (402B, 403, and 701B, 702) electromagnetically coupled with one another.

8. The method (300) according to claim 7, wherein the electromagnetic coupling between the components is one of minimized and maximized.

9. An electrical device (700) comprising:
- at least two coils (701B, 702) electromagnetically coupled with one another,
**characterized in that**
- the coils (701B, 702) are physically aligned such that an electromagnetic coupling there-between is maximized.

10. The electrical device (700) according the claim 9, wherein the coils (701B, 702) are physically aligned at a distance (D2) there-between.

11. The electrical device (700) according to any one of the previous claims, is a device configured to wirelessly transfer power between the coils (701B, 702).

12. An electrical device (400) physically mountable on a current carrying conductor (401), comprising:
- at least two coils (403, 402B) electromagnetically coupled with one another,
**characterized in that**
- the coils (403, 402B) are physically aligned with one another and with the current carrying conductor (401) such that an electromagnetic coupling there-between is minimized.

13. The electrical device (400) according to claim 12, wherein the coils (403, 402B) comprise a sensing coil (403) and a harvesting coil (402B).

14. The electrical device (400) according to any one of the previous claims, wherein one of the coils (403) is physically aligned at a distance (D1) with the current carrying conductor (401) .

15. The electrical device (400) according to any one of the previous claims, wherein the coils (403, 402B) are physically aligned at a distance (D2) there-between.

16. The electrical device (400) according to any one of the previous claims, wherein one of the coils (402B) is at least partially wound on a core (402A) comprising a first core section (402A₁) and a second core section (402A₂).

17. The electrical device (400) according to the claim 16, wherein the first core section (402A₁) and the second core section (402A₁) are physically aligned at a distance (D3) there-between.

18. The electrical device (400) according to any one of the previous claims, is a device powerable by electromagnetic flux induced from the current carrying conductor (401).
